# EUROPEAN PATENT APPLICATION

(11) **EP 0 542 705 A2**
(43) Date of publication of application: **19.05.1993**
(21) Application number: 92850262.4
(22) Date of filing: 10.11.1992
(51) Int. Cl.: H04Q 11/04, H04M 11/06, H04M 1/00

(54) **An arrangement for interface adaptation to a digital telecommunications network**

(30) Priority: 15.11.1991 SE 9103382
(71) Applicant: TELEFONAKTIEBOLAGET LM ERICSSON, S-126 25 Stockholm (SE)
(72) Inventor: Colbing, Stefan, S-136 80 Haninge (SE); Burghardt, Vollmer, S-136 80 Haninge (SE)
(74) Representative: Lövgren, Tage

(57) **Abstract**

The present invention provides an interface adaptor for the connection of a variety of equipment to the ISDN network which utilises the in-built capacity of the ISDN network and, more particularly, the different channels provided by the network, and which includes an S-interface unit (1), a control processor unit (2) and interface circuits (3) which are adapted to provide ports for communication with telemetry equipment, and/or computer terminals and/or analogue equipment.

## Description

The invention relates to an arrangement for connecting equipment of different types to the integrated-services digital network (ISDN).

ISDN is a new network structure which is directly adapted for digital equipment in that it can provide digital connections between user-network interfaces. Existing devices which are used in present day telecommunication networks, for example, telephones, telefax devices, modem equipment, terminals and so on, are not adapted for use in the new network. There is, therefore, a need for a suitable arrangement which will enable the existing devices to interface with ISDN.

At the present time, data communications on the analogue lines of the telephone network are carried out by means of so-called out-band signalling. There are also special data communication networks, especially locally, in parallel with the telephone network. The new network, ISDN, is intended to be able to take care of all types of communication. Furthermore, in ISDN, reference points R, S and T have been defined as points at which physical interfaces may be specified and between which functions have been defined.

One problem with ISDN is that large new investments are required in order to ensure that this new network will be utilisable by subscribers to its full potential because the existing equipment which in itself can be modern and valuable, cannot be directly used with the new network.

It is an object of the present invention to overcome the problems referred to above by the provision of an arrangement for interface adaption of a large number of different types of equipment to the ISDN network which utilise the in-built capacity of the network and, more particularly, the different types of channels provided by such a network.

It is a further object of the present invention that the arrangement is adapted for use with different interfaces for specific applications.

The invention provides an arrangement for interconnecting conventional communications equipment to an integrated-services digital telecommunications network (ISDN) having a D-channel and two B-channels, includes an S-interface unit having a port (SO) for connection to an ISDN circuit characterised in that the arrangement has at least one other port (5, 11) for connection to a conventional communications unit, interface means (3) connected to the said at least one other port for converting traffic and signalling from the said conventional communications unit into ISDN format and ISDN traffic and signalling into a conventional communications format, and a control processor unit (2) for controlling the operation of the interface means (3).

The normal basic rate access (BRA) connection to an ISDN subscriber has two channels, known as the B channels, operating at 64 kbits/s and one channel, known as the D channel, operating at 16 kbits/s. The ISDN data signalling is preferably effected in the D channel.

The arrangement according to the present invention is advantageously housed in a single container i.e. a unified adapter unit having output terminals for the different ports, which can also contain, or be in the form of, a telephone set.

The foregoing and other features according to the present invention will be better understood from the following description with reference to the accompanying drawings, in which:
Figure 1 diagrammatically illustrates an arrangement according to the present invention,
Figure 2 diagrammatically illustrates, in greater detail, the different components that form part of the arrangement illustrated in Figure 1,
Figures 3A to 3D diagrammatically illustrate examples of the different connection arrangements for the invention, and
Figure 4 diagrammatically illustrates the application of the arrangement according to the present invention to different types of equipment.

In the new digital multi-service network, ISDN, all communication is carried out on digital channels. All services can be obtained from the same socket: telephony, data telecommunication, data exchange, packet switched data exchange and telex.

As stated above, the normal BRA (basic rate access) connection to the subscriber is effected by two B channels operating at 64 kbits/s and a D channel operating at 16 kbits/s i.e. a total user bit rate of 144 kbits/s.

The B channels are generally used for circuit switched communications whilst the D channel is used for signalling and packet switching.

The new network, ISDN, replaces the existing system which employs out-band signalling on analogue lines.

The ISDN system is efficacious when a subscriber has a need for data communication and, more especially, when such a need is required in combination with a voice communication facility.

During the period of transition from the present day telecommunications network to the ISDN system, there will be a requirement for interface equipment which will enable different products to be connected to the ISDN network. The main reason for this requirement is that many subscribers have already invested in relatively modern and expensive equipment which cannot be used in the integrated multi-service network without adaption.

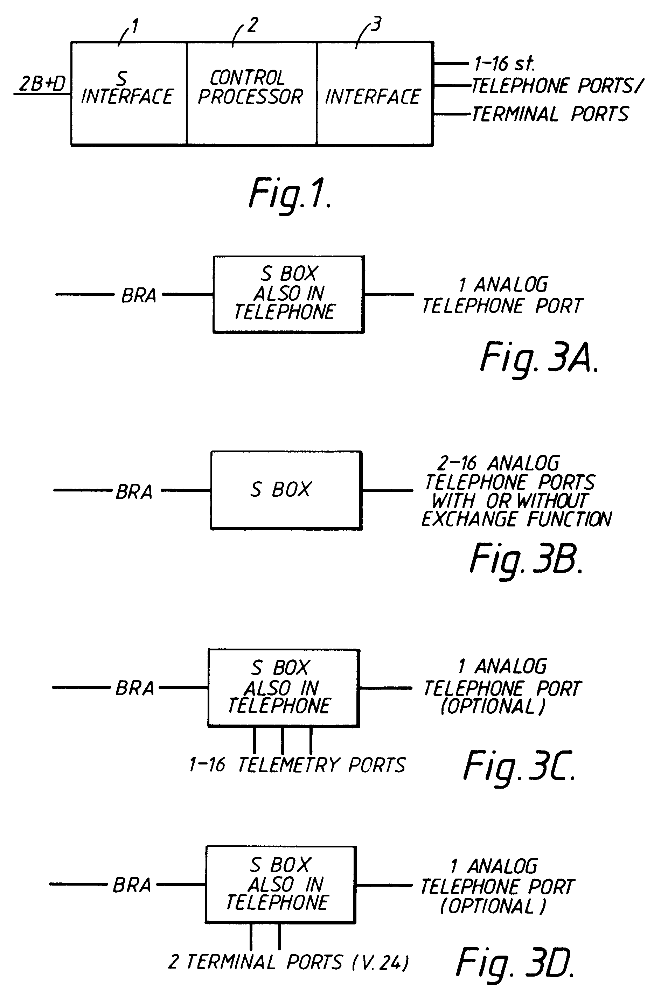

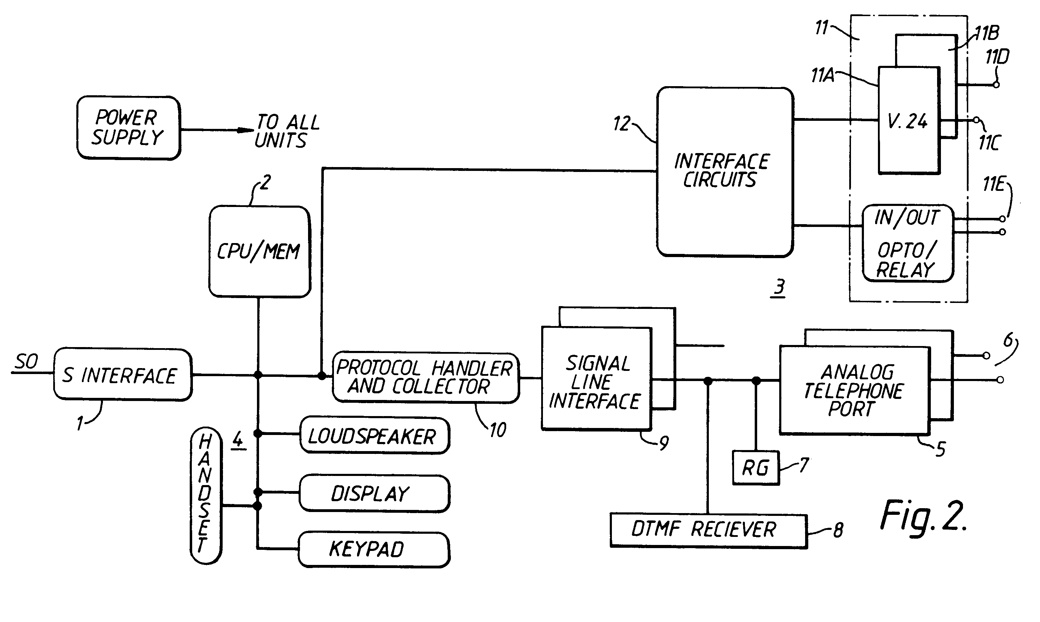

The present invention makes available an arrangement for interface adaption which is diagrammatically illustrated in Figure 1 of the drawings and which includes an interface at the ISDN S reference point i.e. an S-interface unit 1. S-interface units 1 which receive the ISDN channels, normally on a four-wire cable from a network terminal (not shown), are known and are readily available for conventional ISDN connection. The arrangement of Figure 1 further comprises a control processor unit 2 and interface circuits 3 which are adapted in accordance with the present invention. The arrangement is of modular construction and is adapted for all types of applications i.e. for use with different interfaces for specific applications.

Figure 2 diagrammatically illustrates, in greater detail, the different components of the arrangement according to the present invention. The illustrated arrangement includes all of the preferred interface circuits which are the subject of the present invention. The interface circuits to be included will be dependent upon the particular application for which the arrangement is to be used. All of the arrangements will, however, include, an S-interface unit 1 and a control processor unit 2 and at least one interface circuit 3.

The arrangement according to the present invention can, as is illustrated in Figure 2, be associated with, or form part of, a telephone 4 having a loudspeaker, a display, a keypad and a handset (HMT).

Figures 3A to 3D of the drawings diagrammatically illustrate the different connection arrangements that can be provided by the arrangement according to the present invention.

In Figure 3A, the interface adaptor is utilised with an analogue telephone port. For this application, the interface circuit illustrated in Figure 2 would include an analogue telephone port 5 connected to an output terminal 6, a ringing signal generator 7 and a tone dialing receiver 8. This port can be used for connecting, for example, Group 3 telefax units, telephone answering machines etc. to ISDN

The interface adaptor can also provide, as illustrated in Figure 3B of the drawings, several telephone ports, for example, up to 16 telephone ports. For this application, the interface circuit would need to include, in addition to the units 5, 7 and 8 referred to above, a signal line interface 9 and a protocol handler and selector switch 10. This arrangement makes it possible to connect private exchanges and line allocators to ISDN. However, as long as there are only two B channels, only two circuit-switched telephone calls can be connected at the same time.

In Figure 3C, the interface adaptor provides 1 to 16 telemetry ports in addition to an optional analogue telephone port as outlined above with reference to Figures 2 and 3A of the drawings. For this application, the interface circuit illustrated in Figure 2 will include an interface circuit 12 and a unit 11 comprising two telemetry ports 11A and 11B which are respectively connected to output terminals 11C and 11D and which will be in accordance with the V24 standard established by the International Consultative Committee for Telegraph and Telephone (CCITT). The unit 11 also includes a number of single input/output terminals 11E for connection to, for example, single relays or sensors such as optical sensors. The telemetry ports are used for measurement and control equipment, for example, different types of alarms, equipment for monitoring, power control, electricity meter reading and electricity monitoring, control of control and regulatory equipment and the collection of data etc. Data signalling and message transfer is effected via the D channel utilising, for example, the CCITT X.25 protocol. In this way use is made of the fact that the D channel can accommodate several logic channels. The interface circuits 12 are adapted to effect channel selection.

The arrangement according to the present invention can, as is illustrated in Figure 3D of the drawings, also be used solely as a terminal adaptor having two terminal ports which are in compliance with the V24 CCITT standard.

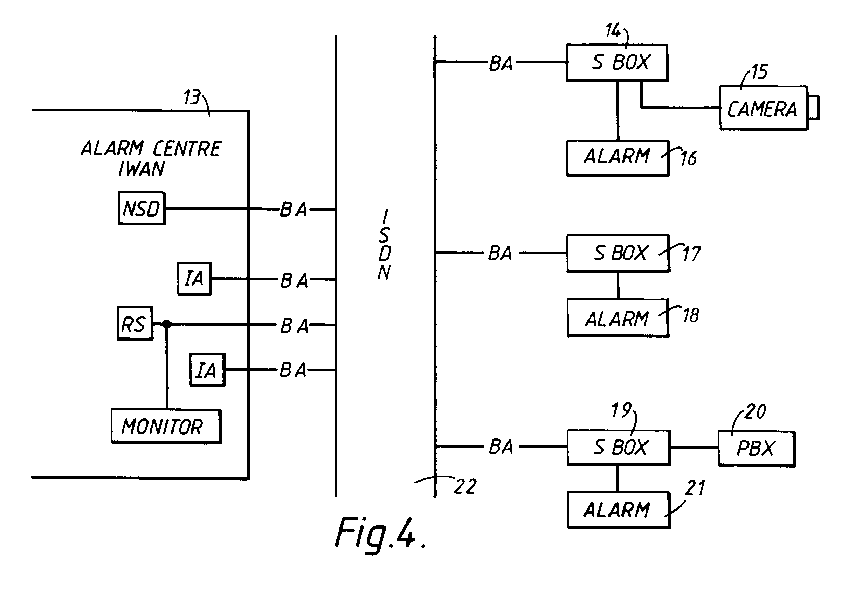

Figure 4 of the drawings diagrammatically illustrates the arrangement according to the invention used in a number of different applications.

In Figure 4, an alarm centre 13 is illustrated which is adapted for use with the ISDN network 22 and which does not, therefore, required an interface adaptor according to the invention.

An interface adaptor 14 according to the invention is illustrated in Figure 4 together with a camera 15 and alarm equipment 16. The camera 15 can, for example, be some form of monitoring camera for use in any number of applications such as, for example, the surveillance of restricted areas or in crowd control at public gatherings. This arrangement would, therefore, makes use of the telemetry ports outlined above with reference to Figures 2 and 3C of the drawings.

Figure 4 also illustrates the use of an interface adaptor 17 according to the invention solely in association with an alarm equipment 18, for example, a security telephone, in which case the analogue telephone port outlined above with reference to Figures 2 and 3A, would be used.

An interface adaptor 19 for use in association with a Private Branch Exchange 20 and an alarm equipment 21 is also illustrated in Figure 4. The adaptor 19 would, therefore, utilises all of the telemetry ports and the analogue telephone ports outlined above with reference to Figures 2 and 3A to 3D of the drawings.

The present invention thus provides a new interface adaptor for the connection of a variety of equipment to the ISDN network, including telemetry equipment, computer terminals and analogue equipment. There are many other examples of equipment that can be connected to the ISDN network in accordance with the present invention which will be obvious to persons skilled in the art.

## Claims

1. An arrangement for interconnecting conventional communications equipment to an integrated-services digital telecommunications network (ISDN) having a D-channel and two B-channels, includes an S-interface unit having a port (SO) for connection to an ISDN circuit characterised in that the arrangement has at least one other port (5, 11) for connection to a conventional communications unit, interface means (3) connected to said at least one other port for converting traffic and signalling from the said conventional communications unit into ISDN format and ISDN traffic and signalling into a conventional communications format, and a control processor unit (2) for controlling the operation of the interface means (3).

2. An arrangement as claimed in claim 1, characterised in that the interface means (3) are adapted for the interconnection of at least one analogue telephone line to ISDN, in that said at least one other port is an analogue telephone port and in that the interface means (3) includes a ringing signal generator (7) and tone dialing receiver (8) connected to the analogue telephone port.

3. An arrangement as claimed in claim 2, characterised in that the interface means (3) are adapted for the interconnection of a number of analogue telephone lines to ISDN and include an analogue telephone port for each of said telephone lines, at least one signal line interface unit (9) and a protocol handler and selector switch (10).

4. An arrangement as claimed in any one of the preceding claims, characterised in that the interface means (3) are adapted for the interconnection of telemetry equipment to ISDN and include two telemetry ports (11A, 11B) for receiving data in CCITT V24 format and an interface unit (12) for converting the received data into ISDN format.

5. An arrangement as claimed in claim 4, characterised in that the telemetry ports are for connection to alarm equipment and/or cameras and/or measurement and control equipment.

6. An arrangement as claimed in any one of preceding claims, characterised in that the D-channel is used for data signalling.

7. An arrangement as claimed in any one of the preceding claims, characterised in that the arrangement is housed in a single container to provide a unified interface adaptor having an output terminal for the or each port.

8. An arrangement as claimed in claim 7, characterised in that the single container also contains, or is in the form of, a telephone (4) having a keypad, display and handset.

9. An arrangement as claimed in claim 1, characterised in that the said at least one other port (11) is adapted for the receipt of a digital data stream from a conventional communications unit, and is connected to an interface unit (9) for converting it to a format suitable for transmission over one or both of the B-channels.

10. An arrangement as claimed in claim 3, characterised in that the interface means (3) include at least two analogue signal ports (5) for receiving analogue traffic signals and in-channel signalling from a conventional telecommunications unit and at least two signal interface units (9) for converting analogue traffic signals and in-channel signalling to an ISDN format in which said traffic signals can be fed, after conversion, to at least one of the two B-channels and said in-channel signalling is fed, after conversion, to the D-channel.

11. An arrangement as claimed in claim 4 or claim 5 characterised in that the arrangement includes at least two ports (11A, 11B) for receiving digital data streams from conventional communications units that are connected to said interface unit (12) for converting the digital data streams to a format suitable for transmission over said D-channel.

12. An arrangement as claimed in any one of the preceding claims, characterised in that the arrangement includes a plurality of ports (5, 11) for receiving:
- analogue traffic signals,
- digital data streams in CCITT V.24 format, and
- telemetry signals,
and interface units (9,12) for converting said analogue traffic signals, digital data streams, and telemetry signals into ISDN format, the control means (2) controlling the distribution of output traffic between the two B-channels and the D-channel.

13. A conventional communications unit characterised in that it includes an arrangement as claimed in any one of the preceding claims.

14. An arrangement as claimed in any one of the preceding claims, characterised in that the conventional communications equipment is one or more of the following:
- a CCITT V.24 data terminal,
- a telephone,
- a video camera,
- an alarm,
- telemetry equipment.
